# EUROPEAN PATENT SPECIFICATION

(11) **EP 0 421 042 B1**
(45) Date of publication and mention of the grant of the patent: **20.04.1994**
(21) Application number: 89850280.2
(22) Date of filing: 05.10.1989
(51) Int. Cl.: A01D 41/14

(54) **Harvesting machine**
Erntemaschine
Machine de récolte

(43) Date of publication of application: 10.04.1991
(73) Proprietor: DE ROTTERDAMSCHE DROOGDOK MAATSCHAPPIJ B.V., NL-3000 AX Rotterdam (NL)
(72) Inventor: Brunér, Hasse, S-544 00 Hjo (SE)
(74) Representative: Hynell, Magnus

(56) References cited:
- BE-A- 789 282
- FR-A- 2 100 465
- GB-A- 784 185
- GB-A- 2 167 634
- GB-A- 2 169 785
- US-A- 2 904 949
- US-A- 2 947 134
- US-A- 4 266 391
- US-A- 4 707 972

## Description

### TECHNICAL FIELD

The present invention relates to a harvester, which comprises a driving unit having a thresher and/or a crop pick-up container, a crop pick-up device designed to collect the crop from the field, which pick-up device is provided with ground-following means, the pick-up device being able to follow the line of the ground, as well as a feeder disposed between the pick-up device and the driving unit, designed to feed the crop towards the thresher or the pick-up container, wherein said pick-up device is pivotally suspended on the feeder in an upper joint (32,33) on the front portion (16) of the feeder, and the pick-up device with its rear face is supported by the front portion of the feeder in at least two points on a lower level than said suspension point, the suspension point and the two support points constituting corners of a fictive triangle with its tip in the suspension point and with a base, which is formed by the connection line (42) between the two support points, said suspension allowing the pick-up device to roll through a pivoting in the suspension point in a pivoting plane defined by said triangle,

### STATE OF THE ART

Harvesters of the kind described above are known, e.g. through US-A-2 947 134, and are available in a plurality of designs. Also, it is known how to mount the pick-up device to allow it to be raised and lowered through a rotation in one or several joints, depending on the line of the ground. It is known i.a. how to place a joint between a front movable portion of the pick-up device and a rear stationary portion, the front portion being designed to be raised and lowered when controlled by ground-sensing detectors, e.g. according to US-A-4 409 778, or be carefully balanced, so called floating, e.g. according to EP-0266338. The first solution is technically complicated, advanced automatic engineering being required, and the second solution is comparatively complicated as regards the mechnical construction. Still, neither of these constructions solves the problem of rendering the pick-up device movable in relation to the longitudinal central axis of the carriage, i.e. the pick-up device is not allowed to rock or roll laterally in relation to said driving unit depending on the lateral gradients of the ground in front of the driving unit.

### BRIEF DESCRIPTION OF THE INVENTION

The object of the present invention is to suggest an improved harvester of the kind described in the preamble. The invention is to be applied to various embodiments of pick-up devices having ground-following means, e.g. pick-up means, which is provided with a knife assembly for grain, corn or other crops or has no knife assembly and is designed to pick up crops already cut and lying on the ground. A particular object of the invention is to suggest a very simple and reliable device. These and other objects can be attained therein that the engagement between the pick-up device and the feeder in said upper point comprises a ball joint coupling, a link joint coupling, a universal joint coupling or the like, but preferably a ball joint coupling. By means of this construction the pick-up device is able to "rock" in relation to said driving unit about a fictive longitudinal central shaft of the carriage.

According to a preferred embodiment of the invention a rotary roll or ball is disposed in each one of said lower support points, either in the front portion of the feeder or in the rear face of the pick-up device. Also, according to this embodiment a roll bed is provided on the rear face of the pick-up device in case the roll or the ball is disposed in the front portion of the feeder and on the front portion of the feeder in case the roll and the ball respectively is disposed on the rear face of the pick-up device respectively.

Also, one object of the invention preferably is to suggest a simple way of allowing the pick-up device to be raised and lowered as there are rises and depressions in the ground line. This is, according to this aspect of the invention, made possible, if the front portion of the pick-up device is resiliently pivotal about a horizontal rotary shaft, the pick-up device being allowed to be raised and lowered, i.e. be displaced in a vertical direction depending on the ground line, through a rotation of the front portion of the feeder and then also of said plane defined by the triangle, about said horizontal rotary shaft. The horizontal rotary shaft suitably is placed at a level below the lower support points. Also, the front portion of the feeder suitably comprises a frame around a feed opening in the feeder. The main portion of the feeder can, in this case, be stationarily mounted on said tow unit or on a device, which in its turn is stationarily mounted on the tow unit, or be mounted to be allowed to be raised and lowered in order to obtain the required stubble height or working height of the operating device. Between the frame-shaped front portion and the main portion of the feeder suitably flexible or telescoping walls are mounted, which prevent the crop from escaping in a lateral direction, when it passes through the frame-shaped front portion and continues into the feeder.

Additional characterizing features and aspects of as well as advantages of the invention will be set forth in the accompanying patent claims as well as in the following description of a preferred embodiment.

### BRIEF DESCRIPTION OF THE DRAWINGS

In the following description of a preferred embodiment reference will be made to the attached drawings, in which:
Fig. 1 shows a harvester according the invention and a load carrier mounted on said harvester having a container designed to collect a crop;

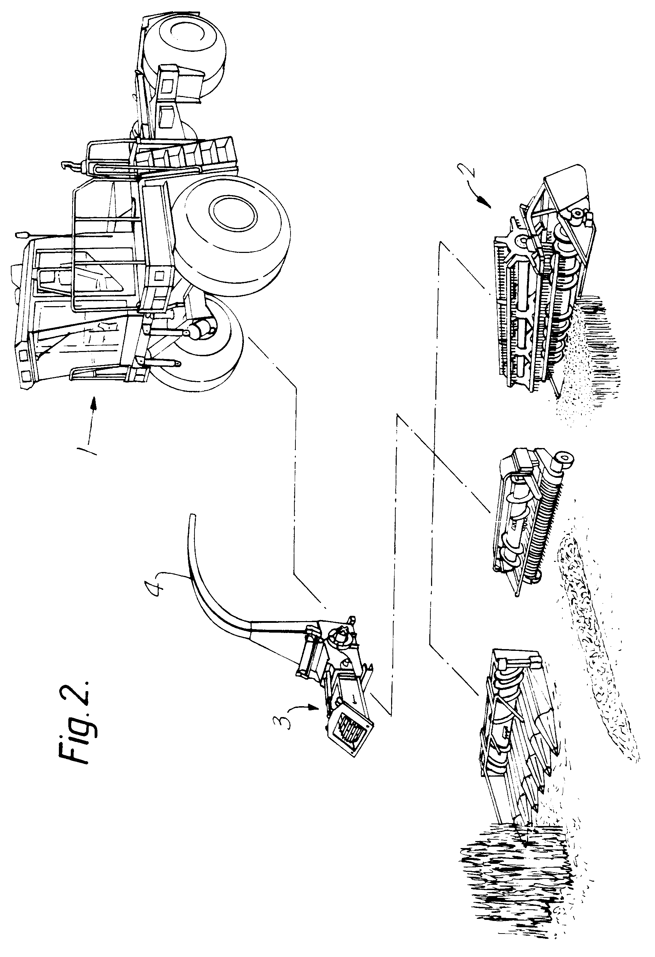

Fig. 2 is a perspective view, which illustrates a few component parts, which a harvester may include;
Fig. 3 is a perspective view of the rear face of the pick-up device from behind at an angle, the rest of the component parts of the pick-up device being shown merely schematically;
Fig. 4 is a front view of the feeder; and

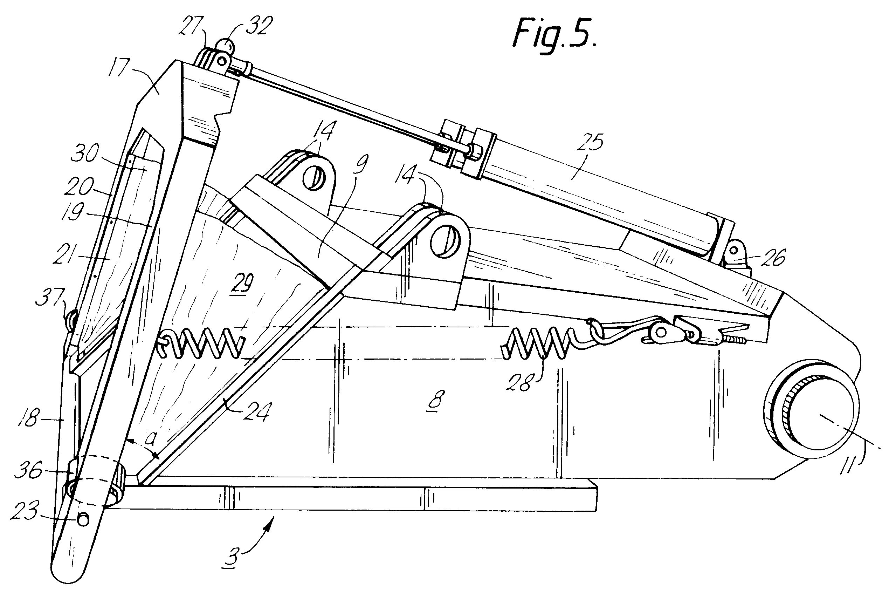

Fig. 5 is a perspective lateral view of the same feeder.

### DESCRIPTION OF A PREFERRED EMBODIMENT

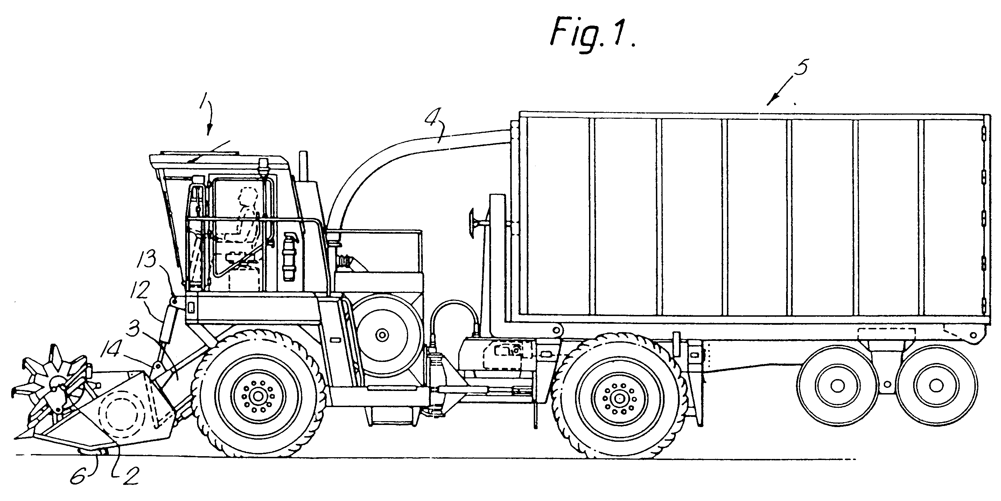

In Fig. 1 are shown firstly a tractor 1, a pick-up device 2, a feeder 3, a blower pipe 4 for the crop from feeder 3 as well as a container 5 mounted on the tractor. Pick-up device 2 is provided with ground-following means 6, which may be designed e.g. as wheels or runners. In the shown embodiment ground-following means 6 are runners.

Main portion 8 of feeder 3 is designed in a known way, and its exterior configuration is generally box-like having a feed opening 9 in its front end and a feeding-out opening (not shown) in its rear end. Said feeding-out opening communicates, according to this embodiment, with blower pipe 4. Feeder 3 is provided, in a way known per se, with an elevator 10, designed to convey the crop through the feeder between its feed opening and its feeding-out opening. Also, feeder 3 is, with its rear end, in a way known per se, pivotally mounted on tractor 1 and can be raised and lowered about a rotary shaft 11 by means of two main cylinders 12, Fig. 1, mounted between mounting handles 13 on tractor 1 and mounting handles 14 on feeder 3, and designed to control working height of pick-up device 2.

The novel feature of the invention relates to the engagement between pick-up device 2 and feeder 3 as well as the matching component parts disposed on the back of pick-up device 2 and on feeder 3, particularly the design of the front face of the feeder.

The front face of feeder 3 is designed as a frame 16 having a top portion 17, a bottom girder 18 and lateral girders 19 and 20, which jointly define a frame-opening 21 essentially having the same size and shape as feed opening 9 in main portion 8 of feeder 3.

Front face 16 of feeder 3 is pivotal about a lower horizontal rotary shaft 23 and is adjustable in various required working positions, which are indicated by an angle a between lateral girders 19,20 of frame-shaped front face 16 and sides 24 on either side of opening 9 in main portion 8 of the feeder. Two adjustable lifting springs 25 are mounted to perform this adjustment and extend between rear mounting handles 26 on the rear portion of feeder 3 and front mounting handles 27 on top portion 17 of the front portion, and also on either side of feeder 3 restraining auxiliary tension springs 28 are provided. Between lateral girders 19,20 of front portion 16 and lateral girders 24 on either side of feed opening 9 a flexible wall 29 and 30 respectively, made of rubber, is disposed on either side, which is folded in its compressed position.

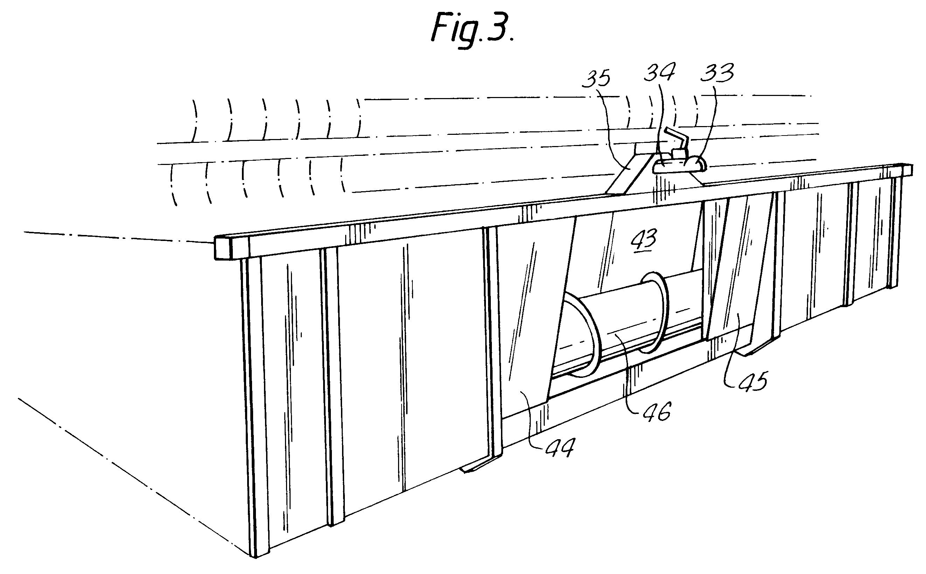

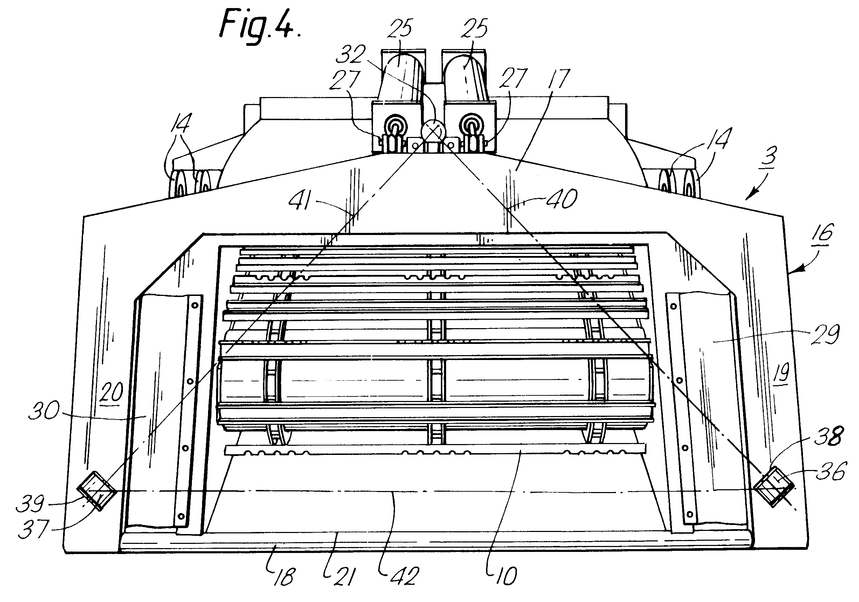

Also, a ball 32 is provided on top portion 27 of the front portion of the feeder and constitutes the male part of a ball joint coupling. Female part 33 of the coupling is mounted on a bracket 34 on an addition 35 on the back of pick-up device 2, Fig. 3. In the lower part of the two lateral girders 19,20 of frame-shaped front portion 16 of feeder 3 a support roll 36 and 37 respectively is mounted, which projects out of an opening 38 and 39 respectively on said lateral girders. Support rolls 36 and 37 are mounted at an angle, as is shown in Fig. 4, the extension of rotational axes 40,41 of said rolls crossing each other in ball 32. Lines 40 and 41 jointly with connection line 42 between the centra of rolls 36 and 37 form an equally sided triangle, line 42 constituting the base and ball 32 the tip of the triangle. Support rolls 36 and 37 can be replaced by ball rolls, mounted in front portion 16 in the same points as support rolls 36 and 37 according to the shown embodiment.

Finally, a feeding-out opening 43 is provided on the back of pick-up device 2, having the same size and shape as opening 21 in frame 16 of feeder 3, and on either side of opening 43 two plane plates 44,45 are provided, which constitute roll beds for rolls 36 and 37 on feeder 3, when the device is mounted. Also, through opening 43 a feed worm 46 is visible, designed in a known way to feed the crop towards feeding-out opening 43 to be transported through feeder 3.

The method of operation of the harvester described above is very simple. Pick-up device 2 is suspended, "glove" 33 being placed on top of ball 32 and the pick-up device, owing to its weight, being pressed, with its roll surfaces 44,45, against rolls 36,37 on the feeder. Front portion 16 of the feeder is adjusted at the same time at a certain angle a, which can be adjusted by means of air cylinders 25, the air pressure of the cylinders being selected with the aid of the force, which the tool, due to its weight, exerts on the ball joint coupling. In this way the tool can be maintained at equilibrium, and consequently in practice it acts as if it were weightless and follows the irregularities of the ground. When the harvester moves along an uneven field, pick-up device 2 is able to, according to the invention, roll laterally as well as move up and down depending on the irregularities of the ground. When pick-up device 2 rolls or rocks laterally, it pivots in ball joint coupling 32,33, and simultaneously rolls 36,37 roll against roll surfaces 44,45 on the back of the pick-up device. If instead - or simultaneously - the pick-up device is raised due to a rise in the ground, the pick-up device will force back frame-shaped front portion 16 of feeder 3 through a rotation about rotary shaft 23, air cylinders 25 being compressed. When the ground will be plane again, the tool, i.e. the pick-up device, will return to its adjusted normal position. In case, on the other hand, the ground-following means of the pick-up device/tool is lowered into a depression in the ground, frame 16 will, due to the inclination of the tool, be pressed forwards, while a counteraction will be obtained by means of springs 28 and an increased air pressure in the air cylinders, when angle a will be increased, but it will later on return to its normal position, when the carriage has reached a level ground.

## Claims

1. A harvester, which comprises a driving unit (1) having a thresher and/or a crop pick-up container (5), a pick-up device (2) designed to pick up crops from the field and provided with ground-following means (6), designed to allow the pick-up device to follow the ground line, as well as a feeder (3) disposed between said pick-up device and said driving unit and designed to feed the crop towards the thresher or the pick-up container, wherein said pick-up device is pivotally suspended on the feeder in an upper joint (32,33) on the front portion (16) of the feeder, and the pick-up device with its rear face is supported by the front portion of the feeder in at least two points on a lower level than said suspension point, the suspension point and the two support points constituting corners of a fictive triangle with its tip in the suspension point and with a base, which is formed by the connection line (42) between the two support points, said suspension allowing the pick-up device to roll through a pivoting in the suspension point in a pivoting plane defined by said triangle, **characterized** in that the engagement between the pick-up device and the feeder in said upper point comprises a ball joint coupling, a link joint coupling, a universal joint coupling or the like, but preferably a ball joint coupling.

2. A harvester according to claim 1, **characterized** in that in each one of said lower support points a rotary roll (36,37) or ball is disposed, either in the front portion of the feeder or on the rear face of the pick-up device, said roll or ball being allowed, during the pivoting of the pick-up device, to roll in said plane against a roll bed (44,45) on the rear face of the pick-up device and on the front portion of the feeder respectively.

3. A harvester according to claim 1, **characterized** in that the front portion of the feeder is resiliently pivotal about a horizontal rotary shaft (23), the pick-up device being allowed to be raised and lowered, i.e. to be displaced in a vertical direction, depending on the line of the ground, through a pivoting of the front portion of the feeder, and then also of said plane defined by the triangle, about said horizontal rotary shaft.

4. A harvester according to claim 3, **characterized** in that the horizontal rotary shaft (23) is disposed at a level below the lower support points.

5. A harvester according to claim 4, **characterized** in that the front portion of the feeder constitutes a frame around a feed opening in said front portion, in that the main portion (8) of the feeder is stationary or mounted to be raised and lowered directly or indirectly on said tow unit, and in that flexible or telescopic walls (29,30) are disposed between the frame-shaped front portion and the main portion of the feeder.

6. A harvester according to claim 2, **characterized** in that the extensions (40,41) of the rotary axes of said balls, which constitute sides of said triangle, cross each other in said upper suspension point.

7. A harvester according to any of the preceding claims, **characterized** in that said triangle is an equally sided triangle.

## Patentansprüche

1. Erntemaschine, die eine Antriebseinheit (1) mit einem Drescher und/oder einem Erntegutaufnahmebehälter (5) aufweist, einer Aufnahmeeinrichtung (2), die zum Aufnehmen des Ernteguts von dem Feld ausgelegt und mit Bodenfolgemitteln (6) versehen ist, die so ausgelegt sind, daß sie die Aufnahmeeinrichtung der Bodenlinie folgen lassen, sowie mit einer Zufuhreinrichtung (3), die zwischen der Aufnahmeeinrichtung und der Antriebseinheit angeordnet und so ausgelegt ist, daß sie das Erntegut zu dem Drescher oder dem Aufnahmebehälter befördert, wobei die Aufnahmeeinrichtung an der Zufuhreinrichtung in einem oberen Gelenk (32, 33) am Vorderabschnitt (16) der Zufuhreinrichtung schwenkbar aufgehängt ist und die Aufnahmeeinrichtung mit ihrer Rückseite von dem Vorderabschnitt der Zufuhreinrichtung an wenistens zwei Punkten auf einer niedrigeren Höhe als dem Aufhängungspunkt gestützt wird, wobei der Aufhängungspunkt und die zwei Stützpunkte Ecken eines gedachten Dreiecks mit einer Spitze in dem Aufhängungspunkt und einer Basis bilden, die durch die Verbindungslinie (42) zwischen den beiden Stützpunkten gebildet ist, wobei es die Aufhängung zuläßt, daß die Aufnahmeeinrichtung über ein Gelenklager im Aufhängungspunkt in einer durch das Dreieck gebildeten Schwenkebene rollt,
**dadurch gekennzeichnet**, daß der Eingriff zwischen der Aufnahmeeinrichtung und der Zufuhreinrichtung in dem oberen Punkt eine Kugelgelenkkupplung, eine Gelenkkupplung, eine Kreuzgelenkkupplung oder ähnliches, aber bevorzugt eine Kugelgelenkkupplung aufweist.

2. Erntemaschine nach Anspruch 1, **dadurch gekennzeichnet**, daß in jedem der unteren Stützpunkte entweder in dem Vorderabschnitt der Zufuhreinrichtung oder an der Rückseite der Aufnahmeeinrichtung eine Drehrolle (36, 37) oder eine Drehkugel angeordnet ist, wobei die Rolle oder die Kugel während des Schwenkens der Aufnahmeeinrichtung in der Ebene gegen ein Rollbett (44, 45) an der Rückseite der Aufnahmeeinrichtung bzw. an dem Vorderabschnitt der Zufuhreinrichtung rollen kann.

3. Erntemaschine nach Anspruch 1, **dadurch gekennzeichnet**, daß der Vorderabschnitt der Zufuhreinrichtung elastisch um eine horizontale Drehwelle (23) schwenkbar ist, wobei die Aufnahmeeinrichtung in Abhängigkeit von der Bodenlinie durch eine Verschwenkung des Vorderabschnitts der Zufuhreinrichtung und damit auch der durch das Dreieck gebildeten Ebene um die horizontale Drehebene angehoben und gesenkt, d.h. in vertikaler Richtung verschoben werden kann.

4. Erntemaschine nach Anspruch 3**, dadurch gekennzeichnet**, daß die horizontale Drehwelle (23) in einer Höhe unter den unteren Stützpunkten angeordnet ist.

5. Erntemaschine nach Anspruch 4, **dadurch gekennzeichnet**, daß der Vorderabschnitt der Zufuhreinrichtung einen Rahmen um eine Zufuhröffnung in dem Vorderabschnitt bildet, daß der Hauptabschnitt (8) der Zufuhreinrichtung stationär oder so angebracht ist, daß er direkt oder indirekt an der Zugeinheit angehoben und gesenkt werden kann, und daß flexible oder teleskopförmige Wände (29, 30) zwischen dem rahmenförmigen Vorderabschnitt und dem Hauptabschnitt der Zufuhreinrichtung angeordnet sind.

6. Erntemaschine nach Anspruch 2, **dadurch gekennzeichnet**, daß sich die Verlängerungen (40, 41) der Drehachsen der Kugeln, die die Seiten eines Dreiecks bilden, in dem oberen Aufhängungspunkt kreuzen.

7. Erntemaschine nach einem der vorhergehenden Ansprüche, **dadurch gekennzeichnet**, daß das Dreieck ein gleichschenkliges Dreieck ist.

## Revendications

1. Machine de récolte comprenant un ensemble de conduite (1), une batteuse et/ou un récipient de réception de récolte (5), un dispositif de ramassage (2) conçu pour ramasser la récolte dans les champs et pourvu d'un système qui suit le sol (6), conçu pour permettre au dispositif de ramassage de suivre le profil du sol, ainsi qu'un dispositif d'alimentation (3) disposé entre le dit dispositif de ramassage et le dit ensemble de conduite et conçu pour diriger la récolte vers la batteuse ou vers le récipient de réception, dans laquelle le dit dispositif de ramassage est suspendu de façon pivotante au dispositif d'alimentation (3) en un point supérieur (32,33) disposé sur la partie avant (16) du dispositif d'alimentation, et la face arrière du dispositif de ramassage est supportée par la partie avant du dispositif d'alimentation en au moins deux points situés à un niveau inférieur par rapport au dit point de suspension, le point de suspension et les deux points de support constituant les angles d'un triangle fictif dont le sommet se trouve au point de suspension et dont la base est formée par la ligne (42) reliant les deux points de support, la dite suspension permettant au dispositif de ramassage, par un pivotement à l'endroit du point de suspension, de rouler dans un plan de pivotement déterminé par ledit triangle, caractérisée en ce que la coopération entre le dispositif de ramassage et le dispositif d'alimentation, à l'endroit du point supérieur, comprend un accouplement à boule, un accouplement par bielle, un accouplement universel ou similaire, mais de préférence un accouplement à boule.

2. Machine de récolte selon la revendication 1 caractérisée en ce que, en chacun des dits points de support inférieurs, est disposé un galet tournant (36,37) ou une boule, soit sur la face avant du dispositif d'alimentation soit sur la face arrière du dispositif de ramassage, ledit galet ou boule étant susceptible, pendant le pivotement du dispositif de ramassage, de rouler dans le dit plan contre un lit de roulement (44,45) se trouvant sur la face arrière du dispositif de ramassage et sur la partie avant du dispositif d'alimentation respectivement.

3. Machine de récolte selon la revendication 1, caractérisée en ce que la partie avant du dispositif d'alimentation peut pivoter élastiquement autour d'un arbre de rotation horizontal (23), le dispositif de ramasage pouvant être élevé et descendu, c'est-à-dire être déplacé en direction verticale, selon le profil du sol, en faisant pivoter la partie avant du dispositif d'alimentation, et aussi le dit plan déterminé par le triangle, autour du dit arbre de rotation.

4. Machine de récolte selon la revendication 3, caractérisée en ce que l'arbre de rotation horizontal (23) est disposé à un niveau plus bas que les points de support inférieurs.

5. Machine de récolte selon la revendication 4, caractérisée en ce que la partie avant du dispositif d'alimentation constitue un cadre entourant une ouverture d'alimentation ménagée dans la dite partie avant, en ce que la partie principale (8) du dispositif d'alimentation est fixe ou bien est montée directement ou indirectement sur le dit ensemble de conduite de façon à pouvoir être élevée et abaissée, et en ce que des parois souples ou téléscopiques (29,30) sont disposées entre la partie en forme de cadre et la partie principale du dispositif d'alimentation.

6. Machine de récolte selon la revendication 2, caractérisée en ce que les prolongements (40,41) des axes de rotation des dites boules, qui constituent des côtés du dit triangle, se coupent au dit point de suspension supérieur.

7. Machine de récolte selon l'une quelconque des revendications précédentes, caractérisée en ce que le dit triangle est un triangle dont les côtés sont égaux.
